# EUROPÄISCHE PATENTSCHRIFT

(11) **EP 2 837 861 B1**
(45) Veröffentlichungstag und Bekanntmachung des Hinweises auf die Patenterteilung: **17.10.2018**
(21) Anmeldenummer: 13180687.9
(22) Anmeldetag: 16.08.2013
(51) Int. Cl.: F16K 1/04, F16K 27/02

(54) **Absperrventilgehäuse und Absperrventil**
Shut-off valve housing and shut-off valve
Boîtier de soupape d'arrêt et soupape d'arrêt

(43) Veröffentlichungstag der Anmeldung: 18.02.2015
(73) Patentinhaber: Geberit International AG, 8645 Jona (CH)
(72) Erfinder: Zbinden, Dario, 8708 Männedorf (CH); Wenk, Silvan, 8716 Schmerikon (CH); Fässler, Raphael, 8654 Jona (CH)
(74) Vertreter: Frischknecht, Harry Ralph

(56) Entgegenhaltungen:
- EP-A1- 1 098 120
- EP-A2- 1 816 378
- EP-A2- 1 895 215
- CN-A- 102 788 165
- ES-A1- 247 748
- GB-A- 702 027
- GB-A- 924 710

## Beschreibung

### TECHNISCHES GEBIET

Die vorliegende Erfindung betrifft ein Absperrventilgehäuse für den Einbau in sanitäre Vorrichtungen, wie Spülkästen, gemäss dem Oberbegriff von Anspruch 1.

### STAND DER TECHNIK

Aus dem Stand der Technik sind Absperrventile für den Einbau in Spülkästen bekannt. Solche Absperrventile dienen der Verbindung von einer hausseitigen Wasserleitung und einem Füllventil.

Die Absperrventile sind üblicherweise aus metallischen Werkstoffen gefertigt. Typischerweise wird aus einem Messing-Rohling ein Schmiedeteil hergestellt, welches dann nachbearbeitet wird. Derartige Absperrventile sind für den Installateur zwar einfach zu installieren, aber die Herstellung ist vergleichsweise aufwändig. Dies insbesondere im Hinblick auf die Metallpreise.

Aus der GB 924 710 sowie aus der CN 102 788 165 ist ein Wasserhahn bekannt geworden, der im Wesentlichen aus Kunststoff besteht und metallische Einsätze aufweist.

### DARSTELLUNG DER ERFINDUNG

Ausgehend von diesem Stand der Technik liegt der Erfindung eine Aufgabe zugrunde, ein Absperrventil anzugeben, welches die Nachteile des Standes der Technik überwindet. Insbesondere soll ein Absperrventil angegeben werden, welches für den Installateur nach wie vor gleich in der Handhabung ist und welches aber deutlich effizienter herstellbar ist.

Diese Aufgabe löst ein Absperrventil nach dem Gegenstand von Anspruch 1. Demgemäss umfasst ein Absperrventilgehäuse für den Einbau in eine sanitäre Vorrichtung, wie in einen Spülkasten, ein im Absperrventilgehäuse angeordneten Wasserführungskanal mit einem Eingang und einem Ausgang. Das Absperrventilgehäuse umfasst ein Gehäuseelement aus Kunststoff und mindestens ein Stutzenelement aus Metall, welches mit dem Gehäuseelement in Verbindung steht, wobei der Wasserführungskanal sich durch das Gehäuseelement und durch das Stutzenelement hindurch erstreckt. Der Wasserführungskanal erstreckt sich durch den Eingangsstutzen und den Ausgangsstutzen und durch das Gehäuseelement. Das Stutzenelement dient dem Anschluss des Absperrventilgehäuses an eine Wasserleitung.

Die Ausbildung des Gehäuseelementes aus Kunststoff und des Stutzenelementes aus Metall hat den Vorteil, dass das Absperrventilgehäuse ressourcenschonender herstellbar ist, wobei die Funktionalität und die Betriebssicherheit nicht eingeschränkt werden. Der Metallanteil eines solchen Absperrventilgehäuses wird reduziert. Weitere Vorteile weist die Ausbildung des Stutzenelementes aus Metall auf, weil dem Installateur herkömmliche und ihm bekannte Anschlussmethoden an die Wasserleitung bereitgestellt werden. So kann die Verbindungsstelle zwischen Stutzenelement und der Wasserleitung nach wie vor mittels Hanf oder ähnlichem abgedichtet werden. Zudem sorgt die Ausbildung des Stutzenelementes aus Metall für eine zeitlich dauerhafte und bezüglich Wasser dichte Verbindung zum Leitungsnetz.

Das Stutzenelement weist mindestens zwei bezüglich des Wasserführungskanals gegenüberliegende Schlüsselflächen auf, welche Schlüsselflächen vom Gehäuseelement freiliegend sind. Über die Schlüsselflächen kann der Installateur das Absperrventilgehäuse mit einem Schraubenschlüssel oder einer Rohrzange greifen. Die besagten Schlüsselflächen sind durch Durchbrüche bzw. Ausnehmungen in der Wand des Gehäuseelementes zugänglich.

Das Stutzenelement wie auch das Gehäuseelement weisen jeweils eine Bohrung oder Öffnung auf, welche den Wasserführungskanal bereitstellen.

In einer Weiterbildung umfasst das Absperrventilgehäuse einen den Eingang aufweisenden Eingangsstutzen und einen den Ausgang aufweisenden Ausgangsstutzen. Vorzugsweise bildet das metallische Stutzenelement den Eingangsstutzen und/oder den Ausgangsstutzen.

In einer besonders bevorzugten Ausführungsform ist ausschliesslich der Eingangsstutzen durch das metallische Stutzenelement bereitgestellt, während der Ausgangsstutzen und das Gehäuseelement aus Kunststoff sind. Der Ausgangsstutzen ist dabei Teil des Gehäuseelementes. Die Ausbildung des Eingangsstutzens mit dem metallischen Stutzenelement hat den Vorteil, dass das Absperrventilgehäuse vielseitig an einer Vielzahl von verschiedenen gebäudeseitigen Wasserleitungen angeschlossen werden kann.

Sowohl der Eingangsstutzen als auch der Ausgangsstutzen weisen vorzugsweise ein Gewinde auf, mit welchem der entsprechende Stutzen mit einer Wasserleitung verbindbar ist.

Der Wasserführungskanal wird mit einer Gehäusewand begrenzt, welche durch das Gehäuseelement und ggf. durch das Stutzenelement bereitgestellt wird.

Vorzugsweise stellt das Stutzenelement mit einer Bohrung eine Verlängerung des Wasserführungskanals dar und stellt zudem einen Teil der Gehäusewand des Wasserführungskanals bereit. Das Wasser kommt also in Kontakt mit dem Stutzenelement sowie mit dem Gehäuseelement.

In einer alternativen Ausführungsform umschliesst das Stutzenelement die Gehäusewand des Wasserführungskanals auf deren dem Wasserführungskanal abgewandten Oberfläche mit einer Bohrung mindestens teilweise. Das Stutzenelement umschliesst also das Gehäuseelement, welches sich seinerseits durch das Stutzenelement hindurch erstreckt, so dass das Stutzenelement nicht mit dem Wasser in Kontakt kommt.

Die Bohrung verläuft vorzugsweise zentral durch das Stutzenelement.

Besonders bevorzugt umschliesst bzw. überdeckt das Gehäuseelement die zum Wasserführungskanal zugewandte Oberfläche des Stutzenelements im Wesentlichen vollständig.

Vorzugsweise sind das Gehäuseelement und das Stutzenelement stoffschlüssig und/oder formschlüssig miteinander verbunden sind, so dass ein einstückiges Absperrventilgehäuse bereitgestellt ist.

Besonders bevorzugt ist das Stutzenelement als Einlegeteil und das Gehäuseelement als Spritzgussteil ausgebildet, wobei das Gehäuseelement dem Stutzenelement angespritzt wird. Hierdurch kann ein besonders guter Verbund zwischen Gehäuseelement und Stutzenelement erreicht werden. Weiter erlaubt diese Art der Verbindung auch eine wirtschaftliche Herstellung.

Vorzugsweise weisen das Stutzenelement und das Gehäuseelement jeweils einen Verbindungsabschnitt auf, über welche Verbindungsabschnitte das Stutzenelement mit dem Gehäuseelement miteinander in Verbindung stehen.

In einer besonders bevorzugten Ausführungsform weist das Stutzenelement einen innenliegenden und einen aussenliegenden Verbindungsabschnitt auf, welche beide mit entsprechenden Verbindungsabschnitten am Gehäuseelement in Verbindung stehen.

Besonders bevorzugt ist das Stutzenelement im Bereich des Verbindungsabschnittes sowohl auf der Seite, die dem Wasserführungskanal weg gewandt ist, als auch auf der Seite, die dem Wasserführungskanal zugewandt, durch das Gehäuseelement mindestens teilweise umgeben ist. Somit wird eine besonders gute Verbindung zwischen Stutzenelement und Gehäuseelement bereitgestellt.

Vorzugsweise ragt das Stutzenelement im Bereich des Verbindungsabschnittes abschnittsweise in das Gehäuseelement ein.

Vorzugsweise weist das Stutzenelement eine Funktionsstruktur auf, welche die Verbindung zum Gehäuseelement verbessert bzw. unterstützt. In einer besonders bevorzugten Ausführungsform weist das Stutzenelement auf seiner zum Wasserführungskanal zugewandten Seite eine Funktionsstruktur, insbesondere in der Form von radial zum Wasserführungskanal umlaufenden Rillen, auf. Alternativ oder zusätzlich weist das Stutzenelement auf seiner dem Wasserführungskanal abgewandten Seite eine Funktionsstruktur, insbesondere in der Form von axial zum Wasserführungskanal umlaufenden Rillen, auf.

Die besagten Schlüsselflächen sind bevorzugt im Bereich der Funktionsstruktur angeordnet.

Weiter weist das Stutzenelement vorzugsweise ein Gewinde auf, über welche das Stutzenelement mit einer Wasserleitung verbindbar ist.

Besonders bevorzugt ist das Absperrventilgehäuse als Eckventilgehäuse ausgebildet, wobei der Wasserführungskanal einen Umlenkbereich aufweist, und wobei der Eingangsstutzen winklig zum Ausgangsstutzen verläuft. Der Winkel zwischen Eingangsstutzen und Ausgangsstutzen beträgt vorzugsweise 90°.

Vorzugsweise ist im Wasserführungskanal mindestens ein Ventilsitz für die Zusammenarbeit eines Ventilstössels angeordnet und im Gehäuseelement ist mindestens ein Aufnahmeabschnitt zur Aufnahme des Ventilstössels angeordnet, wobei der Aufnahmeabschnitt vorzugsweise ein Gewinde ist. Der Aufnahmeabschnitt mündet in den Wasserführungskanal.

Vorzugsweise weisen das Gehäuseelement und/oder das Stutzenelement ein Positionierabschnitt zur Positionierung des Absperrventilgehäuses in einem Spülkasten auf.

Vorzugsweise weisen das Gehäuseelement und/oder das Stutzenelement einen Befestigungsabschnitt auf, über welchen das Absperrventilgehäuse mit einem Befestigungselement zu einem Spülkasten befestigbar ist.

Besonders bevorzugt ist der Volumenanteil der metallischen Bestandteile am Absperrventil kleiner als der Volumenanteil der Bestandteile aus Kunststoff. Der Volumenanteil der metallischen Bestandteile ist in einer besonders bevorzugten Ausführungsform wesentlich kleiner als der Volumenanteil der Bestandteile aus Kunststoff.

Ein Absperrventil, insbesondere eine Eckventil, umfasst ein Absperrventilgehäuse nach obiger Beschreibung, wobei im Wasserführungskanal ein Ventilstössel angeordnet ist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer ersten Ausführungsform eines Absperrventilgehäuses mit schematisch dargestelltem Spülkasten von oben;
- Fig. 2: eine perspektivische Ansicht des Absperrventilgehäuses nach Figur 1 von unten;
- Fig. 3: eine perspektivische Ansicht des Absperrventilgehäuses nach Figuren 1 und 2 ohne Spülkasten;
- Fig. 4a/b: eine Explosionsdarstellung des Absperrventilgehäuses nach den vorhergehenden Figuren, wobei das Stutzenelement getrennt vom Gehäuseelement dargestellt ist;
- Fig. 5: eine Seitenansicht des Absperrventilgehäuses nach den vorhergehenden Figuren;
- Fig. 6: eine Schnittdarstellung entlang der Schnittline VI-VI der Figur 5 mit schattiertem Stutzenelement gemäss einer Variante; und
- Fig. 7: eine Schnittdarstellung entlang der Schnittline VI-VI der Figur 5 mit schattiertem Stutzenelement gemäss einer weiteren Variante.

### BESCHREIBUNG BEVORZUGTER AUSFÜHRUNGSFORMEN

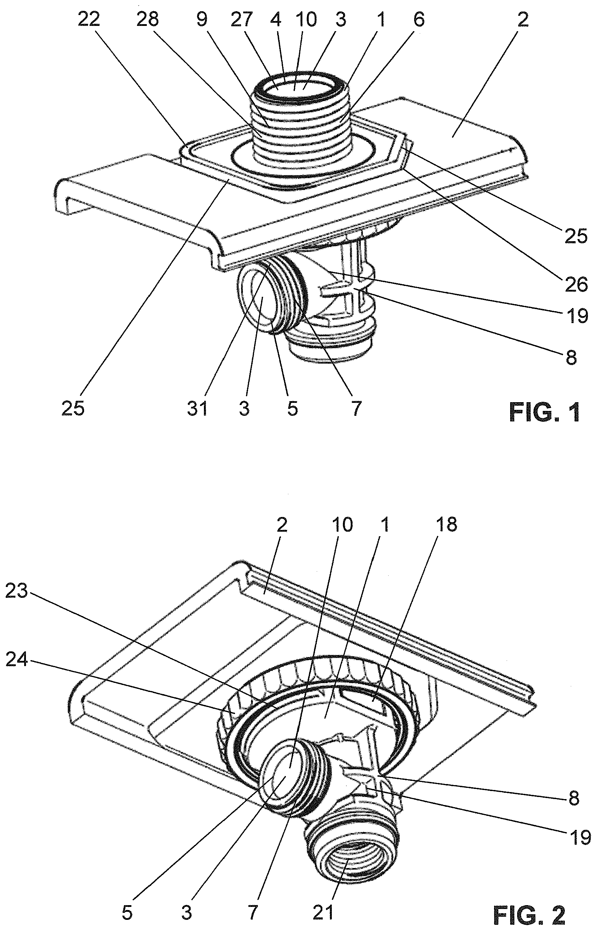

In den Figuren 1 und 2 wird eine perspektivische Ansicht einer Ausführungsform eines erfindungsgemässen Absperrventilgehäuses 1 gezeigt. Das Absperrventilgehäuse 1 ist hier in einem teilweise dargestellten Spülkasten 2 eingebaut. Das Absperrventilgehäuse 1 eignet sich also für den Einbau in eine sanitäre Vorrichtung. Insbesondere beim Einbau in einen Spülkasten ist das Absperrventilgehäuses 1 vorzugsweise als Eckventilgehäuse ausgebildet.

Das Absperrventilgehäuse 1 umfasst ein im Absperrventilgehäuses 1 angeordneten Wasserführungskanal 3 mit einem Eingang 4 und einem Ausgang 5. Über den Eingang 4 kann Wasser dem Wasserführungskanal 3 zugeführt werden und über den Ausgang 5 verlässt das Wasser den Wasserführungskanal 3 wieder. Weiter umfasst das Absperrventilgehäuses 1 einen den Eingang 4 aufweisenden Eingangsstutzen 6 und einen den Ausgang 5 aufweisenden Ausgangstutzen 7. Über den Eingangsstutzen 6 beziehungsweise den Ausgangsstutzen 7 kann das Absperrventilgehäuses 1 an eine Wasserleitung angeschlossen werden. Die Wasserleitung, welche mit dem Eingangsstutzen 6 in Verbindung steht ist meistens Teil eines Leitungsnetzes in einem Gebäude. Die Wasserleitung, welche mit dem Ausgangsstutzen 7 in Verbindung steht, führt, wenn das Absperrventilgehäuse in einem Spülkasten eingesetzt wird, zu einem Füllventil. Hierfür wird meist ein Schlauch, insbesondere ein Panzerschlauch, eingesetzt.

Das Absperrventilgehäuse 1 umfasst ein Gehäuseelement 8 aus Kunststoff und mindestens ein Stutzenelement 9 aus Metall, welches mit dem Gehäuseelement 8 in Verbindung steht. Der Wasserführungskanal 3 erstreckt sich durch das Gehäuseelement 8 und durch das Stutzenelement 9 hindurch. Das Stutzenelement 9 stellt den Eingangsstutzen 6 mit dem Eingang 4 und/oder den Ausgangsstutzen 7 mit dem Ausgang 5 bereit. Das Stutzenelement 9 wie auch das Gehäuseelement 8 weisen jeweils eine Bohrung bzw. Öffnung auf, welche den Wasserführungskanal 3 bereitstellen.

In einer besonders bevorzugten Ausführungsform wird ausschliesslich der Eingangsstutzen 6 durch das metallische Stutzenelement 9 bereitgestellt. Der Ausgangsstutzen 7 ist dann Teil des Gehäuseelementes 8. Mit anderen Worten: Der Ausgangsstutzen 7 und der Rest des Absperrventilgehäuses 1 sind dann aus Kunststoff ausgebildet.

Das Gehäuseelement 8 umfasst in der vorliegenden Ausführungsform einen Positionierabschnitt 22 zur Positionierung des Absperrventilgehäuses in einem Spülkasten 2. Der Positionierungsabschnitt 22 ist hier als umlaufender Flansch ausgebildet und weist Positionierungsflächen 25 auf. Diese Positionierungsflächen 25 stehen in Kontakt mit entsprechenden Flächen 26 am Spülkasten. Die Positionierungsflächen 25 sind asymmetrisch ausgebildet, sodass das Absperrventilgehäuse nur in einer vorbestimmten Lage in den Spülkasten 2 eingebaut werden kann. Der Positionierabschnitt 22 kann aber auch am Stutzenelement 9 oder am Gehäuseelement 8 und am Stutzenelement 9 angeordnet sein.

Weiter weist das Gehäuseelement 8 in der vorliegenden Ausführungsform einen Befestigungsabschnitt 23 auf. Dieser Befestigungsabschnitt 23 kann in der Figur 2 gut erkannt werden. Der Befestigungsabschnitt 23 arbeitet mit einem Befestigungselement 24 zusammen. Über das Befestigungselement 24, welches hier die Form einer Ringmutter aufweist, kann das Absperrventilgehäuse 1 zum Spülkasten 2 geklemmt werden. Der Befestigungsabschnitt 23 weist vorzugsweise die Gestalt eines Gewindes auf.

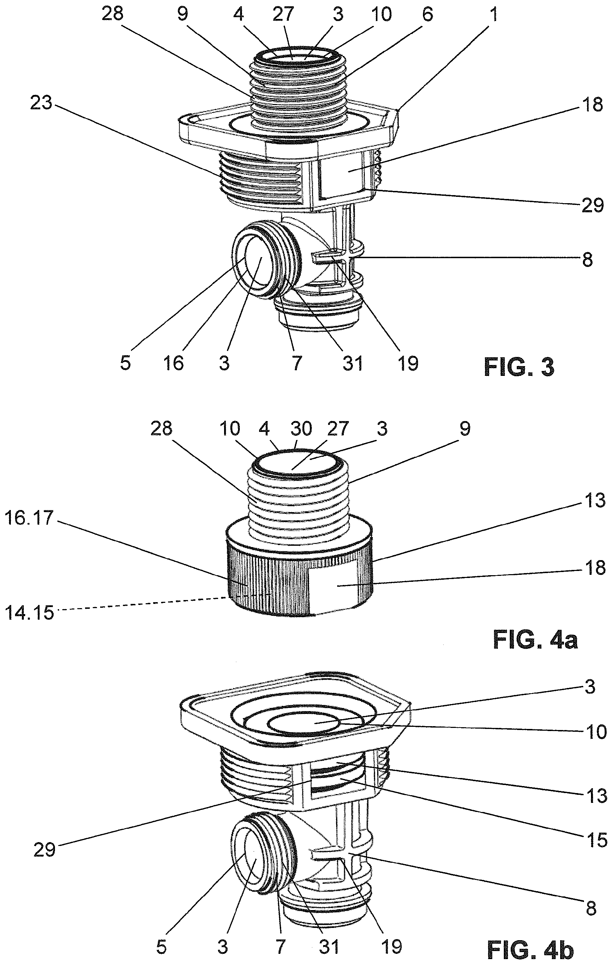

In der Figur 3 wird das Absperrventilgehäuse 1 ohne den Spülkasten 2 gezeigt. Die Figuren 4a und 4b zeigen eine Explosionsdarstellung des Absperrventilgehäuses 1, wobei das Gehäuseelement 8 und das Stutzenelement 9 voneinander getrennt dargestellt sind.

In der Figur 4a wird das bevorzugte Stutzenelement 9 gezeigt. Das Stutzenelement 9 ist aus Metall. Besonders bevorzugt wird das Stutzenelement 9 aus Messing gefertigt. Es handelt sich beispielsweise um ein Schmiedeteil, welches nach dem Schmieden spanabhebend oder anderweitig umformend bearbeitet wird.

In der Figur 4b wird das Gehäuseelement 8 in Alleinstellung, also getrennt vom Stutzenelement 9 gezeigt. Das Gehäuseelement 8 ist aus Kunststoff, insbesondere aus einem Thermoplast.

Das Gehäuseelement 8 und das Stutzenelement 9 stehen stoffschlüssig und/oder formschlüssig miteinander in Verbindung. Es wird also ein einstückiges Absperrventilgehäuse 1 umfassend bzw. bestehend aus dem Gehäuseelement 8 und dem Stutzenelement 9 bereitgestellt. Das Stutzenelement 9 ist vorzugsweise als Einlegeteil und das Gehäuseelement 8 als Spritzgussteil ausgebildet. Das Gehäuseelement 8 wird dem Stutzenelement 9 in einem Spritzgussverfahren angespritzt.

In den Figuren 4a und 4b kann die materialtechnische Trennung zwischen Stutzenelement 9 und Gehäuseelement 8 besonders gut erkannt werden. Das Stutzenelement 9 stellt in der besonders bevorzugten Ausführungsform den Eingangsstutzen 6 bereit. Der Ausgangsstutzen 7 und das Gehäuseelement 8 bilden ein einziges Teil, welches aus Kunststoff gefertigt ist. Folglich ist also in der besonders bevorzugten Ausführungsform ausschliesslich bzw. nur der Eingangsstutzen 6 aus Metall gefertigt, während der Rest des Gehäuses aus Kunststoff ist.

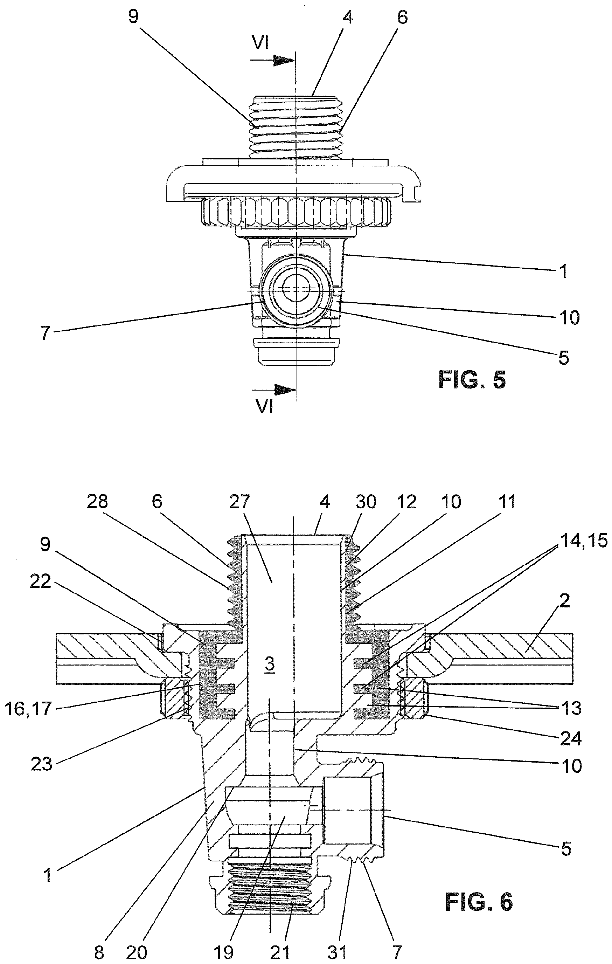

In der Figur 6 wird eine Schnittdarstellung entlang der Schnittlinie VI-VI der Figur 5 gezeigt. Hier wird eine Variante der Ausbildung des Absperrventilgehäuses im Bereich des Eingangsstutzens gezeigt. Gemäss dieser Variante umschliesst das Stutzenelement 9 die Gehäusewand 10 des Wasserführungskanal 3 auf deren dem Wasserführungskanal 3 abgewandten Oberfläche 11. Mit anderen Worten gesagt erstrecken sich Teile des Gehäuseelementes 8 durch das Stutzenelement 9 bzw. das Stutzenelement 9 umgibt das Gehäuseelement 8 teilweise. Die dem Wasserführungskanal 3 zugewandte Oberfläche des Stutzenelementes 9 wird also durch das Gehäuseelement 8 überdeckt. Somit wird der Wasserführungskanal 3 ausschliesslich durch Teile des Gehäuseelementes 8 aus Kunststoff bereitgestellt, wobei der Wasserführungskanal 3 sich dennoch durch das Stutzenelement 9 hindurch erstreckt. Dies hat den Vorteil, dass das Wasser nicht mit Metall in Kontakt kommt, sondern ausschliesslich mit Kunststoff in Kontakt ist.

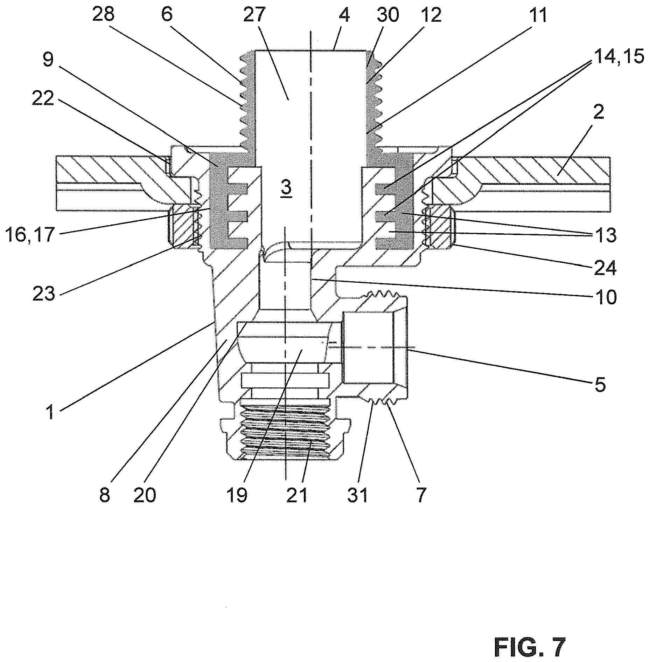

In der Figur 7 wird eine Schnittdarstellung entlang der Schnittlinie VI-VI der Figur 5 gezeigt. Hier wird eine weitere Variante der Ausbildung des Absperrventilgehäuses im Bereich des Eingangsstutzens gezeigt. Gemäss dieser Variante stellt das Stutzenelement 9 eine Verlängerung des Wasserführungskanals 3 ausserhalb des Gehäuseelementes 8 dar.

Das Stutzenelement stellt einen Teil der Gehäusewand 10 des Wasserführungskanals 3 bereit. Der Wasserführungskanal setzt sich in dieser Ausführungsform aus Teilen des Gehäuseelementes 8 und aus dem Stutzenelement 9 zusammen.

Von den Schnittdarstellungen der Figuren 6 und 7 und der Explosionsdarstellung der Figuren 4a und 4b kann erkannt werden, dass das Stutzenelement 9 und das Gehäuseelement 8 jeweils einen Verbindungsabschnitt 13 aufweisen. Über die Verbindungsabschnitte 13 stehen das Stutzenelement 9 und das Gehäuseelement 8 miteinander in Verbindung.

In einer besonders bevorzugten Ausführungsform weist das Stutzenelement 9 einen innenliegenden und einen aussenliegenden Verbindungsabschnitt 13 auf. Über diese beiden Verbindungsabschnitte 13 steht das Stutzenelement 9 mit dem Gehäuseelement 8 in Verbindung. Somit wird das Stutzenelement 9 im Bereich dieser Verbindungsabschnitte durch das Gehäuseelement 8 umgeben.

Das Stutzenelement 9 ragt im Bereich der Verbindungsabschnitt 13 abschnittsweise in das Gehäuseelement 8 ein und wird in diesen Abschnitte durch das Gehäuseelement 8 umgeben.

Das Stutzenelement 9 weist im Bereich des Verbindungsabschnittes 13 auf seiner zum Wasserführungskanal 3 zugewandten Seite eine Funktionsstruktur 14 auf. Die Funktionsstruktur 14 hat hier die Form von radial zum Wasserführungskanal 3 umlaufenden Rillen 15. Hier sind drei Rillen 15 angeordnet. Es können auch weniger oder mehr als drei Rillen angeordnet werden.

Zusätzlich oder alternativ zur innenliegenden Funktionsstruktur weist das Stutzenelement 9 auf seiner dem Wasserführungskanal 3 abgewandten Seite im Bereich der Verbindungsabschnitte 13 eine Funktionsstruktur 16 auf. Die Funktionsstruktur 16, welche auf der dem Wasserführungskanal 3 abgewandten Seite angeordnet ist, weist eine Vielzahl von axial zum Wasserführungskanal verlaufenden Rillen 17 auf.

Die Funktionsstrukturen 14 und 16 verbessern die Verbindung der Verbindungsabschnitte 13 zum Gehäuseelement 8.

Weiter weist das Stutzenelement 9, wie dies in der Figur 3 beziehungsweise den Figuren 4a und 4b erkannt werden kann, mindestens zwei bezüglich des Wasserführungskanals 3 gegenüberliegende Schlüsselflächen 18 auf. Über diese Schlüsselflächen 18 kann der Installateur das Absperrventilgehäuse 1 mit einem Schlüssel oder einer Rohrzange ergreifen. Die Schlüsselflächen 18 sind Teil des Stutzenelementes 9 und somit aus Metall. Das heisst es werden bei der Montage des Absperrventilgehäuses die grossen Kräfte über die metallischen Teile aufgebracht. Die Elemente aus Kunststoff werden nicht belastet.

Die Schlüsselflächen 18 sind vom Gehäuseelement 8 freiliegend so wie dies in der Figur 3 dargestellt wird. Das Gehäuseelement 8 weist im Bereich der Schlüsselflächen 18 entsprechende Ausnehmungen bzw. Durchbrüche 29 auf. Durch diese Ausnehmungen 29 ragt die Schlüsselfläche 18 aus dem Gehäuseelement 8 hinaus. Besonders bevorzugt sind die Schlüsselflächen 18 im Bereich der Funktionsstruktur 16, also der in axialer Richtung verlaufenden Rillen 17 angeordnet. Eine andere Anordnung ist auch denkbar.

Mit Bezug auf die Figur 4a wird das Stutzenelement 9 im Detail erläutert. Das Stutzenelement 9 weist, wie bereits erwähnt eine Bohrung 27 auf, welche sich durch das Stutzenelement 9 hindurch erstreckt, Die Bohrung 27 wird durch eine Wandung 30 begrenzt. Aussenseitig weist das Stutzenelement 9 ein Aussengewinde 28 auf. Über dieses Aussengewinde 28 lässt sich das Stutzenelement 9 mit einer Wasserleitung verbinden. Dem Aussengewinde 28 schliesst sich dann in axialer Richtung der Verbindungsabschnitt 13 mit den oben beschriebenen Eigenschaften an. Der Durchmesser des Verbindungsabschnittes 13 ist dabei grösser als der Durchmesser des Gewindes 28. Die Bohrung 27 stellt ein Teil des Wasserführungskanals bereit bzw. dar. Die Bohrung 27 kann vorzugsweise durch das Gehäuseelement 8 überdeckt oder freiliegend sein.

Der Ausgangsstutzen 7 weist ein Aussengewinde 31 auf, über welches ein Schlauch angeschlossen werden kann.

Besonders bevorzugt ist das Absperrventilgehäuse 1 als Eckventil ausgebildet. Der Wasserführungskanal 3 weist dabei einen Umlenkungsbereich 19 auf. Der Umlenkungsbereich 19 wird in den Figuren 6 und 7 entsprechend dargestellt. Somit verläuft der Eingangsstutzen 6 winklig zum Ausgangsstutzen 7.

Im Wasserführungskanal 3 ist mindestens ein Ventilsitz 20 für die Zusammenarbeit eines in den Figuren nicht dargestellten Ventilstössels angeordnet. Der Ventilsitz 20 kann verschiedenartig ausgebildet sein, bevorzugterweise ist der Ventilsitz 20 aber Teil des Gehäuseelementes 8.

Das Gehäuseelement 8 umfasst zudem einen Aufnahmeabschnitt 21 zur Aufnahme des Ventilstössels. Der Aufnahmeabschnitt 21 weist in der vorliegenden Ausführungsform die Gestalt eines Gewindes auf. Der Ventilstössel wird über dieses Gewinde zum Ventilsitz 20 bewegt beziehungsweise vom Ventilsitz 20 wegbewegt.

Gemäss einem Verfahren zur Herstellung des hierin beschriebenen Absperrventilgehäuses wird in einen ersten Schritt das Stutzenelement 9 aus Metall in einer Spritzgussform platziert. In einem dem ersten Schritt folgenden zweiten Schritt wird das Gehäuseelement 8 aus Kunststoff am Stutzenelement 9 angespritzt.

**BEZUGSZEICHENLISTE**

| | | | |
|---|---|---|---|
| 1 | Absperrventilgehäuse | 29 | Ausnehmung |
| 2 | Spülkasten | 30 | Wandung |
| 3 | Wasserführungskanal | 31 | Aussengewinde |
| 4 | Eingang | | |
| 5 | Ausgang | | |
| 6 | Eingangsstutzen | | |
| 7 | Ausgangssutzen | | |
| 8 | Gehäuseelement | | |
| 9 | Stutzenelement | | |
| 10 | Gehäusewand | | |
| 11 | Aussenseite | | |
| 12 | Oberfläche | | |
| 13 | Verbindungsabschnitt | | |
| 14 | Funktionsstruktur | | |
| 15 | Rille | | |
| 16 | Funktionsstruktur | | |
| 17 | Rille | | |
| 18 | Schlüsselflächen | | |
| 19 | Umlenkbereich | | |
| 20 | Ventilsitz | | |
| 21 | Aufnahmeabschnitt | | |
| 22 | Positionierabschnitt | | |
| 23 | Befestigungsabschnitt | | |
| 24 | Befestigungselement | | |
| 25 | Positionierungsfläche | | |
| 26 | Flächen | | |
| 27 | Bohrung/Öffnung | | |
| 28 | Aussengewinde | | |

## Patentansprüche

1. Absperrventilgehäuse (1) für den Einbau in eine sanitäre Vorrichtung, wie in einen Spülkasten (2), umfassend
ein im Absperrventilgehäuse (1) angeordneten Wasserführungskanal (3) mit einem Eingang (4) und einem Ausgang (5),
wobei das Absperrventilgehäuse (2) ein Gehäuseelement (8) aus Kunststoff und mindestens ein Stutzenelement (9) aus Metall umfasst, welches mit dem Gehäuseelement (8) in Verbindung steht, wobei der Wasserführungskanal (3) sich durch das Gehäuseelement (8) und durch das Stutzenelement (9) hindurch erstreckt,
wobei das Stutzenelement (9) mindestens zwei bezüglich des Wasserführungskanals (3) gegenüberliegende Schlüsselflächen (18) aufweist,
**dadurch gekennzeichnet, dass** die besagten Schlüsselflächen (18) im Bereich der Verbindung des Stutzenelements (9) zum Gehäuseelement (8) angeordnet sind und dass die besagten Schlüsselflächen (18) durch Durchbrüche bzw. Ausnehmungen (29) in der Wand des Gehäuseelements (8) zugänglich und vom Gehäuseelement (8) freiliegend sind.

2. Absperrventilgehäuse nach Anspruch 1, **dadurch gekennzeichnet, dass** das Absperrventilgehäuse einen den Eingang (4) aufweisenden Eingangsstutzen (6) und einen den Ausgang (5) aufweisenden Ausgangsstutzen (7) aufweist,
wobei das Stutzenelement (9) den Eingangsstutzen (6) und/oder den Ausgangsstutzen (7) bereitstellt; oder
wobei ausschliesslich der Eingangsstutzen (6) durch das metallische Stutzenelement (9) bereitgestellt wird, während der Ausgangsstutzen (7) und das Gehäuseelement (8) aus Kunststoff sind.

3. Absperrventilgehäuse nach Anspruch 1 oder 2, **dadurch gekennzeichnet, dass** das Stutzenelement (9) mit einer Bohrung oder Öffnung (27) eine Verlängerung des Wasserführungskanals (3) darstellt und einen Teil der Gehäusewand (10) des Wasserführungskanals (3) bereitstellt.

4. Absperrventilgehäuse nach Anspruch 1 oder 2, **dadurch gekennzeichnet, dass** das Stutzenelement (9) die Gehäusewand (10) des Wasserführungskanals (3) auf deren dem Wasserführungskanal (3) abgewandten Oberfläche (11) mit einer Bohrung (27) mindestens teilweise umschliesst.

5. Absperrventilgehäuse nach Anspruch 4, **dadurch gekennzeichnet, dass** das Gehäuseelement (8) die zum Wasserführungskanal (3) zugewandte Oberfläche (12) des Stutzenelements (9) im Wesentlichen vollständig überdeckt.

6. Absperrventilgehäuse nach einem der vorhergehenden Ansprüche, **dadurch gekennzeichnet, dass** das Gehäuseelement (8) und das Stutzenelement (9) stoffschlüssig und/oder formschlüssig miteinander verbunden sind, so dass ein einstückiges Absperrventilgehäuse (1) bereitgestellt ist.

7. Absperrventilgehäuse nach einem der vorhergehenden Ansprüche, **dadurch gekennzeichnet, dass** das Stutzenelement (9) als Einlegeteil und das Gehäuseelement (8) als Spritzgussteil ausgebildet ist, wobei das Gehäuseelement (8) dem Stutzenelement (9) angespritzt wird.

8. Absperrventilgehäuse nach einem der vorhergehenden Ansprüche, **dadurch gekennzeichnet, dass** das Stutzenelement (9) und das Gehäuseelement (8) jeweils mindestens einen Verbindungsabschnitt (13) aufweisen, über welche Verbindungsabschnitte (13) das Stutzenelement (9) mit dem Gehäuseelement (8) miteinander in Verbindung stehen.

9. Absperrventilgehäuse nach Anspruch 8, **dadurch gekennzeichnet, dass** das Stutzenelement (9) im Bereich des Verbindungsabschnittes (13) sowohl auf der Seite (11), die dem Wasserführungskanal (3) weg gewandt ist, als auch auf der Seite (12), die dem Wasserführungskanal (3) zu gewandt ist, durch das Gehäuseelement (8) mindestens teilweise umgeben ist.

10. Absperrventilgehäuse nach Anspruch 8, **dadurch gekennzeichnet, dass** das Stutzenelement (9) im Bereich des Verbindungsabschnittes (13) abschnittsweise in das Gehäuseelement (8) einragt.

11. Absperrventilgehäuse nach einem der vorhergehenden Ansprüche, **dadurch gekennzeichnet, dass** das Stutzenelement (9) auf seiner zum Wasserführungskanal zugewandten Seite (12) eine Funktionsstruktur (14), insbesondere in der Form von radial zum Wasserführungskanal umlaufenden Rillen (15), aufweist, welche die Verbindung zum Gehäuseelement (8) verbessert und/oder dass das Stutzenelement (9) auf seiner dem Wasserführungskanal abgewandten Seite eine Funktionsstruktur (16), insbesondere in der Form von axial zum Wasserführungskanal umlaufenden Rillen (17), aufweist, welche die Verbindung zum Gehäuseelement (8) verbessert.

12. Absperrventilgehäuse nach Anspruch 11, **dadurch gekennzeichnet, dass** die besagten Schlüsselflächen (18) im Bereich der dem Wasserfügungskanal abgewandten Seite des Stutzenelements angeordneten Funktionsstruktur (16) angeordnet sind.

13. Absperrventilgehäuse nach einem der vorhergehenden Ansprüche, **dadurch gekennzeichnet, dass** das Absperrventilgehäuse (1) als Eckventilgehäuse ausgebildet ist, wobei der Wasserführungskanal (3) einen Umlenkbereich (19) aufweist, und wobei der Eingangsstutzen (6) winklig zum Ausgangsstutzen (7) verläuft.

14. Absperrventilgehäuse nach einem der vorhergehenden Ansprüche, **dadurch gekennzeichnet, dass** im Wasserführungskanal (3) mindestens ein Ventilsitz (20) für die Zusammenarbeit eines Ventilstössels angeordnet ist und dass im Gehäuseelement (8) mindestens ein Aufnahmeabschnitt (21) zur Aufnahme des Ventilsstössels angeordnet ist, wobei der Aufnahmeabschnitt vorzugsweise ein Gewinde ist.

15. Absperrventilgehäuse nach einem der vorhergehenden Ansprüche, **dadurch gekennzeichnet, dass** das Gehäuseelement (8) und/oder das Stutzenelement (9) einen Positionierabschnitt (22) zur Positionierung des Absperrventilgehäuses in einem Spülkasten (2) umfasst und/oder dass das Gehäuseelement (8) und/oder das Stutzenelement (9) einen Befestigungsabschnitt (23) aufweist, über welchen das Absperrventilgehäuse mit einem Befestigungselement (24) zu einem Spülkasten befestigbar ist und/oder dass das Stutzenelement (9) aussenseitig ein Gewinde (28) aufweist.

16. Absperrventil, insbesondere eine Eckventil, mit einem Absperrventilgehäuse nach einem der vorhergehenden Ansprüche, wobei im Wasserführungskanal (3) ein Ventilstössel angeordnet ist.

17. Spülkastenanordnung umfassend einen Spülkasten mit einer Aufnahme zur Befestigung eines Absperrventils nach Anspruch 16 sowie ein Absperrventil nach Anspruch 16.

18. Verfahren zur Herstellung eines Absperrventilgehäuses nach einem der Ansprüche 1 bis 15, **dadurch gekennzeichnet, dass** das Stutzenelement (9) aus Metall in einer Spritzgussform platziert wird und dass anschliessend das Gehäuseelement (8) aus Kunststoff am Stutzenelement (9) angespritzt wird.

## Claims

1. A shutoff valve housing (1) for installation in a sanitary device, such as in a cistern (2), comprising
a water duct (3), which is arranged in the shutoff valve housing (1) and has an inlet (4) and an outlet (5),
wherein the shutoff valve housing (2) comprises a housing element (8), made of plastic, and at least one connector element (9), made of metal, which latter is in connection with the housing element (8), wherein the water duct (3) extends through the housing element (8) and through the connector element (9),
wherein the connector element (9) comprises at least two, with respect to the water duct (3), opposite flats (18),
**characterized in that** said flats (18) are arranged in the region of the connection of the connector element (9) to the housing element (8) and **in that** said flats (18) are accessible through recesses resp. breakthroughs (29) in the wall of the of the housing element (8) and are left exposed by the housing element (8).

2. The shutoff valve housing as claimed in claim 1, **characterized in that** the shutoff valve housing comprises an inlet connector (6) comprising the inlet (4) and an outlet connector (7) comprising the outlet (5),
wherein the connector element (9) provides the inlet connector (6) and/or the outlet connector (7); or
wherein solely the inlet connector (6) is provided by the metallic connector element (9), while the outlet connector (7) and the housing element (8) are made of plastic.

3. The shutoff valve housing as claimed in claim 1 or 2, **characterized in that** the connector element (9), with a bore or opening (27), constitutes an extension of the water duct (3) and provides a part of the housing wall (10) of the water duct (3).

4. The shutoff valve housing as claimed in claim 1 or 2, **characterized in that** the connector element (9) at least partially encloses the housing wall (10) of the water duct (3), on its surface (11) facing away from the water duct (3), with a bore (27).

5. The shutoff valve housing as claimed in claim 4, **characterized in that** the housing element (8) substantially fully covers that surface (12) of the connector element (9) which is facing toward the water duct (3).

6. The shutoff valve housing as claimed in any one of the preceding claims, **characterized in that** the housing element (8) and the connector element (9) are integrally and/or positively connected to each other, so that a one-piece shutoff valve housing (1) is provided.

7. The shutoff valve housing as claimed in any one of the preceding claims, **characterized in that** the connector element (9) is configured as an insert part and the housing element (8) as an injection molded part, wherein the housing element (8) is molded onto the connector element (9).

8. The shutoff valve housing as claimed in any one of the preceding claims, **characterized in that** the connector element (9) and the housing element (8) respectively comprise at least one connecting portion (13), by which connecting portions (13) the connector element (9) and the housing element (8) are in connection with each other.

9. The shutoff valve housing as claimed in claim 8, **characterized in that** the connector element (9) is at least partially surrounded in the region of the connecting portion (13), both on the side (11) facing away from the water duct (3) and on the side (12) facing toward the water duct (3), by the housing element (8).

10. The shutoff valve housing as claimed in claim 8, **characterized in that** the connector element (9) projects in the region of the connecting portion (13) in some sections into the housing element (8).

11. The shutoff valve housing as claimed in any one of the preceding claims, **characterized in that** the connector element (9) comprises on its side (12) facing toward the water duct a functional structure (14), in particular in the form of circumferential grooves (15) running radially to the water duct, which functional structure improves the connection to the housing element (8), and/or **in that** the connector element (9) comprises on its side facing away from the water duct a functional structure (16), in particular in the form of circumferential grooves (17) running axially to the water duct, which functional structure improves the connection to the housing element (8).

12. The shutoff valve housing as claimed in claim 11, **characterized in that** said flats (18) are arranged in the region of the functional structure (16), which is arranged on that side of the connector element which is facing away from the water duct.

13. The shutoff valve housing as claimed in any one of the preceding claims, **characterized in that** the shutoff valve housing (1) is configured as an angle valve housing, wherein the water duct (3) has a deflection region (19), and wherein the inlet connector (6) runs at an angle to the outlet connector (7).

14. The shutoff valve housing as claimed in any one of the preceding claims, **characterized in that** in the water duct (3) is arranged at least one valve seat (20) for the cooperation of a valve tappet, and **in that** in the housing element (8) is arranged at least one receiving portion (21) for receiving the valve tappet, wherein the receiving portion is preferably a thread.

15. The shutoff valve housing as claimed in any one of the preceding claims, **characterized in that** the housing element (8) and/or the connector element (9) comprises a positioning portion (22) for the positioning of the shutoff valve housing in a cistern (2), and/or **in that** the housing element (8) and/or the connector element (9) comprises a fastening portion (23), via which the shutoff valve housing is fastenable with a fastening element (24) to a cistern, and/or **in that** the connector element (9) comprises on the outer side a thread (28).

16. A shutoff valve, in particular an angle valve, comprising a shutoff valve housing as claimed in any one of the preceding claims, wherein a valve tappet is arranged in the water duct (3).

17. A cistern arrangement comprising a cistern having a receptacle for the fastening of a shutoff valve as claimed in claim 16 as well as a shutoff valve as claimed in claim 16.

18. A method for producing a shutoff valve housing as claimed in any one of claims 1 to 15, **characterized in that** the metal connector element (9) is placed in an injection mold, and **in that** the plastic housing element (8) is subsequently molded onto the connector element (9).

## Revendications

1. Un boîtier de vanne d'arrêt (1) destiné à être installé dans un dispositif sanitaire, tel que dans un réservoir de chasse (2), comprenant
un canal de conduite d'eau (3) disposé dans le boîtier de vanne d'arrêt (1) ayant une entrée (4) et une sortie (5),
où le boîtier de vanne d'arrêt (2) comprend un élément de boîtier (8) en matière plastique et au moins un élément d'embout (9) en métal, qui est relié à l'élément de boîtier (8), où le canal de conduite d'eau (3) s'étend à travers l'élément de boîtier (8) et à travers l'élément d'embout (9),
où l'élément d'embout (9) présente au moins deux surfaces pour clé (18) opposées par rapport au canal de conduite d'eau (3),
**caractérisé en ce que**
les dites surfaces pour clé (18) sont disposées dans le domaine de la liaison de l'élément d'embout (9) à l'élément de boîtier (8),
et que lesdites surfaces pour clé (18) sont accessibles à l'aide de percées respectivement d'évidements dans la paroi de l'élément de boîtier (8) et sont exposées par rapport à l'élément de boîtier (8).

2. Le boîtier de vanne d'arrêt selon la revendication 1, **caractérisé en ce que** le boîtier de vanne d'arrêt présente un embout d'entrée (6) présentant l'entrée (4) et un embout de sortie (7) présentant la sortie (5),
où l'élément d'embout (9) fournit l'embout d'entrée (6) et/ou l'embout de sortie (7) ; ou
où uniquement l'embout d'entrée (6) est fourni par l'élément d'embout en métal (9), tandis que l'embout de sortie (7) et l'élément de boîtier (8) sont en matière plastique.

3. Le boîtier de vanne d'arrêt selon la revendication 1 ou 2, **caractérisé en ce que** l'élément d'embout (9) avec un alésage ou une ouverture (27) représente un prolongement du canal de conduite d'eau (3) et fournit une partie de la paroi du boîtier (10) du canal de conduite d'eau (3).

4. Le boîtier de vanne d'arrêt selon la revendication 1 ou 2, **caractérisé en ce que** l'élément d'embout (9) entoure au moins partiellement la paroi de boîtier (10) du canal de conduite d'eau (3) sur sa surface (11) opposée au canal de conduite d'eau (3) avec un alésage (27).

5. Le boîtier de vanne d'arrêt selon la revendication 4, **caractérisé en ce que** l'élément de boîtier (8) recouvre sensiblement complètement la surface (12) de l'élément d'embout (9) tournée vers le canal de conduite d'eau (3).

6. Le boîtier de vanne d'arrêt selon l'une des revendications précédentes, **caractérisé en ce que** l'élément de boîtier (8) et l'élément d'embout (9) sont reliés l'un à l'autre par liaison complémentaire de force et/ou de matière de sorte à ce qu'un boîtier de vanne d'arrêt (1) en une seule pièce soit prévu.

7. Le boîtier de vanne d'arrêt selon l'une des revendications précédentes, **caractérisé en ce que** l'élément d'embout (9) est réalisé sous la forme d'une pièce d'insertion et l'élément de boîtier (8) sous la forme d'une pièce moulée par injection, où l'élément de boîtier (8) est injecté sur l'élément d'embout (9).

8. Le boîtier de vanne d'arrêt selon l'une des revendications précédentes, **caractérisé en ce que** l'élément d'embout (9) et l'élément de boîtier (8) comportent chacun au moins une section de liaison (13), par l'intermédiaire desquelles sections de liaison (13) l'élément d'embout (9) est relié à l'élément de boîtier (8).

9. Le boîtier de vanne d'arrêt selon la revendication 8, **caractérisé en ce que** l'élément de d'embout (9) est entouré au moins partiellement par l'élément de boîtier (8) dans la zone de la section de liaison (13), tant du côté (11) opposé au canal de conduite d'eau (3) que du côté (12) tourné vers le canal de conduite d'eau (3).

10. Le boîtier de vanne d'arrêt selon la revendication 8, **caractérisé en ce que** l'élément de d'embout (9) pénètre dans l'élément de boîtier (8) par sections dans la zone de la section de liaison (13).

11. Le boîtier de vanne d'arrêt selon l'une des revendications précédentes, **caractérisé en ce que** l'élément de d'embout (9) présente une structure fonctionnelle (14), en particulier sous la forme de rainures (15) s'étendant radialement par rapport au canal de conduite d'eau, sur son côté (12) tourné vers le canal de conduite d'eau, qui améliore la liaison avec l'élément de boîtier (8) et/ou **en ce que** l'élément de d'embout (9) présente une structure fonctionnelle (16), en particulier sous la forme de rainures (17) s'étendant axialement par rapport au canal de conduite d'eau, sur son côté opposé au canal de conduite d'eau, qui améliore la liaison avec l'élément de boîtier (8).

12. Le boîtier de vanne d'arrêt selon la revendication 11, **caractérisé en ce que** lesdites surfaces pour clé (18) sont disposées dans la région de la structure fonctionnelle (16) éloignée du canal de conduite d'eau de l'élément de d'embout (9) .

13. Le boîtier de vanne d'arrêt selon l'une des revendications précédentes, **caractérisé en ce que** le boîtier de vanne d'arrêt (1) est conçu comme un boîtier de vanne d'angle, le canal de conduite d'eau (3) ayant une zone de déviation (19), et l'embout d'entrée (6) s'étendant selon un angle par rapport à l'embout de sortie (7).

14. Le boîtier de vanne d'arrêt selon l'une des revendications précédentes, **caractérisé en ce qu'**au moins un siège de vanne (20) est prévu dans le canal de conduite d'eau (3) pour la coopération d'une tige de vanne et qu'au moins une section de réception (21) pour recevoir la tige de vanne est disposée dans l'élément de boîtier (8), où la section de réception est de préférence un filetage.

15. Le boîtier de vanne d'arrêt selon l'une des revendications précédentes, **caractérisé en ce que** l'élément de boîtier (8) et/ou l'élément d'embout (9) comprend une section de positionnement (22) pour positionner le boîtier de vanne d'arrêt dans un réservoir de chasse (2) et/ou **en ce que** l'élément de boîtier (8) et/ou l'élément d'embout (9) comprend une section de fixation (23), par laquelle le boîtier de vanne d'arrêt peut être fixé à un réservoir de chasse par un élément de fixation (24) et/ou **en ce que** l'élément d'embout (9) comprend un filetage (28) du côté extérieur.

16. Une vanne d'arrêt, en particulier vanne d'angle, comportant un boîtier de vanne d'arrêt selon l'une des revendications précédentes, où une tige de vanne est disposée dans le canal de conduite d'eau (3).

17. Un ensemble de chasse d'eau comprenant une chasse d'eau ayant un logement pour la fixation d'une vanne d'arrêt selon la revendication 16 et une vanne d'arrêt selon la revendication 16.

18. Procédé de fabrication d'un boîtier de vanne d'arrêt selon l'une des revendications 1 à 15, **caractérisé en ce que** l'élément d'embout en métal est placé dans un moule d'injection et **en ce que** l'élément de boîtier (8) en matière plastique est ensuite injecté sur l'élément d'embout (9).
